# FASCICULE DE BREVET EUROPEEN

(11) **EP 0 591 793 B1**
(45) Date de publication et mention de la délivrance du brevet: **17.12.1997**
(21) Numéro de dépôt: 93115487.6
(22) Date de dépôt: 25.09.1993
(51) Int. Cl.: A23L 1/168

(54) **Pâtes de riz**
Reisteigware
Rice pasta

(30) Priorité: 09.10.1992 CH 3164/92
(43) Date de publication de la demande: 13.04.1994
(73) Titulaire: SOCIETE DES PRODUITS NESTLE S.A., 1800 Vevey (CH)
(72) Inventeur: Hauser, Thomas Wilhelm, CH-8057 Zürich (CH); Lechthaler, Jurg, CH-8304 Wallisellen (CH)
(74) Mandataire: Wavre, Claude-Alain

(56) Documents cités:
- EP-A- 0 105 100
- EP-A- 0 468 251
- EP-A- 0 555 768
- GB-A- 2 145 319

## Description

La présente invention a pour objet un procédé de préparation de pâtes instantanées.

Parmi les pâtes traditionnelles, les nouilles de riz chinoises connues sous le nom de Koay Teow, par example, présentent une forme de ruban et une texture lisse, tendre et légèrement élastique. Un procédé traditionnel de préparation de telles pâtes peut comprendre, par example, les étapes successives de trempage du riz à température ambiante, égouttage, broyage avec de l'eau dans un moulin à pierre, filtrage, premier et bref traitement à la vapeur, refroidissement, formage, second traitement à la vapeur, et séchage.

US 4521436 (Lou et al.) décrit un procédé de préparation d'un produit réhydratable présentant l'apparence et la texture de grains de riz, par cuisson-extrusion d'une farine de riz additionnée d'un agent émulsifiant, d'un agent de levage, optionnellement d'une gomme, et d'eau.

US 4440794 (Davies) décrit une composition pour la préparation d'un pudding de riz instantané comprenant du sucre, de l'amidon. de la matière grasse, du lait écrémé en poudre, un agent émulsifiant, optionnellement une gomme, et des granules obtenus par cuisson-extrusion d'une farine de riz additionnée d'un agent complexant de l'amidon, d'un agent de levage, de lait écrémé en poudre et d'une quantité minimale d'eau.

US 4544563 (Lechthaler) décrit un procédé de fabrication de pâtes alimentaires à base de féculents tels que le riz ou le maïs, par exemple, par cuisson-extrusion d'un mélange de farine ou semoule dudit féculent, d'eau adoucie et d'un agent gélifiant ionique, mise en contact du mélange extrudé avec de l'eau contenant un cation formant un gel avec ledit agent gélifiant ionique, égouttage, découpage et séchage. Le procédé selon US 4544563 permet de préparer ainsi des pâtes alimentaires à base de riz ou de maïs, par exemple, qui présentent une cohésion comparable à celle de pâtes alimentaires traditionnelles à base de blé.

EP 0468251 (SOCIETE DES PRODUITS NESTLE S.A.) décrit un procédé de fabrication de pâtes alimentaires aromatisées déshydratées, dans lequel on prépare un mélange présentant une teneur en matière sèche de 52-56% et comprenant une farine ou semoule de féculent, de l'eau adoucie, un agent émulsifiant, un agent gélifiant ionique et une composition aromatique, on forme les pâtes par cuisson-extrusion du mélange sous 20-100 bar à 60-105°C, on met en contact les pâtes formées avec une solution aqueuse de calcium et on les sèche.

La présente invention a pour but de proposer un procédé de préparation de pâtes de riz instantanées de type Koay Teow qui ne comprenne qu'un nombre limité d'étapes et qui soit aisément réalisable industriellement.

A cet effet, dans le procédé selon la présente invention, on prépare un mélange présentant une teneur en matière sèche de 32 à moins de 45 % en poids et comprenant une farine ou semoule de riz, de l'eau adoucie dont la concentration en ions calcium est inférieure à 2.10⁻⁴ moles/l, un agent gélifiant ionique, un agent émulsifiant et un agent de levage, on forme des pâtes par cuisson-extrusion du mélange sous 8-69 bar à 60-105°C, on met immédiatement les pâtes en contact avec de l'eau contenant un cation formant un gel avec ledit agent gélifiant ionique et on les sèche.

On a constaté avec surprise que l'on peut obtenir ainsi des pâtes qui, après une brève cuisson de deux minutes dans l'eau bouillante, présentent une texture lisse et tendre comparable à celle des nouilles de riz traditionnelles chinoises connues sous le nom de Koay Teow. On a constaté en particulier que l'addition d'un agent de levage audit mélange n'a pas pour effet de conférer à ces pâtes extrudées une texture spongieuse mais qu'au contraire, en combinaison avec l'addition d'un agent émulsifiant, elle a pour effet de conférer à ces pâtes extrudées la texture particulière recherchée.

Dans le présent exposé on utilise l'expression "pâtes de type Koay Teow" pour décrire des pâtes qui présentent cette texture particulière caractéristique des nouilles de riz chinoises connues sous ce nom, à savoir une texture lisse et tendre légèrement élastique, qui rappelle celle de feuilles de choux étuvées.

Cette texture peut donc être définie par comparaison avec la texture de nouilles Koay Teow traditionnelles, ou par comparaison avec la texture d'autres produits à base de riz ou de farine de riz, ou encore, comme on l'a fait ci-dessus, par comparaison avec la texture d'autres produits cuits ou étuvés traditionnels tels que des choux.

C'est ainsi que, dans le présent exposé, on détermine la texture des présentes pâtes de type Koay Teow par des dégustations, d'une part, et par des mesures de résistance au cisaillement en cellule Instron, autrement dit des mesures de dureté Instron, d'autre part.

On a constaté en effet que les pâtes qui présentent la texture désirée dans le cadre de la présente invention présentent une dureté Instron bien déterminable située entre la dureté Instron d'un pouding au riz et celle de nouilles de riz de type "Beehoon" telles qu'on peut les obtenir par le procédé selon US 4544563 mentionné ci-dessus par exemple.

On a constaté en particulier que, dans les conditions du test de dureté présenté ci-après les pâtes présentant la texture désirée selon la présente invention, autrement dit les pâtes de type Koay Teow selon la présente invention, présentent une dureté Instron comprise entre environ 400 et 1200 N.

Pour mettre en oeuvre le présent procédé on utilise du riz, optionnellement en combinaison avec un amidon à haute teneur en amylose tel que l'amidon de mais, par exemple. Dans une forme de réalisation préférée du présent procédé, on prépare un mélange comprenant, en parties en poids, 75-100 parties de farine ou semoule de riz, 5-20 parties d'amidon, 0,2-1 partie d'agent gélifiant ionique, 1-5 parties d'agent émulsifient, et 0,5-3 parties d'agent de levage.

En ce qui concerne ladite eau adoucie, celle-ci devrait permettre de différer la réaction de l'agent gélifiant ionique avec un cation formant un gel avec lui. On utilise à cet effet une eau dont la concentration en ions calcium est inférieure à 2.10⁻⁴ moles/l.

En outre, étant donné la teneur en eau élevée du mélange, on le prépare de préférence avec une eau adoucie préchauffée. C'est ainsi que la température de l'eau adoucie avec laquelle on prépare le mélange peut être de 10-80°C de préférence de 60-80°C.

En ce qui concerne l'agent gélifiant ionique, on peut utiliser un polysaccharide acide tel qu'un pectate, un alginate ou la carboxyméthylcellulose. On utilise de' préférence un alginate, notamment l'alginate de sodium.

Quant audit cation formant un gel avec l'agent gélifiant ionique, on choisit de préférence un ion de métal alcalino-terreux, notamment le calcium.

L'agent émulsifiant peut être choisi parmi ceux qui sont susceptibles de former un complexe avec l'amylose, notamment ceux qui contiennent un monoester d'acide gras, par exemple. On utilise de préférence un monoglycéride.

Ledit agent de levage peut être choisi parmi les agents chimiques alimentaires connus pour libérer du gaz carbonique sous l'effet de la chaleur, par exemple. On utilise de préférence un carbonate et/ou un phosphate de calcium, ammonium, sodium et/ou potassium.

On réalise donc la cuisson-extrusion du mélange sous 8-69 bar à 60-105°C. On la réalise de préférence durant environ 20-120 s, à savoir durant un temps suffisant pour gélatiniser la pâte par chauffage et pétrissage dans les conditions de pression et de température indiquées.

Il s'est avéré que la température présentée par les pâtes à la sortie de la filière de l'appareil de cuisson-extrusion utilisé pouvait être critique. On a constaté notamment que l'on obtenait des résultats particulièrement satisfaisants si cette température était légèrement supérieure à 100°C, par exemple. C'est ainsi que, dans une forme préférée du présent procédé, on ajuste la température de la pâte au cours de la cuisson-extrusion de manière qu'elle soit comprise entre plus de 100 et 105°C à la sortie de la filière.

Après la cuisson-extrusion, il faut mettre les pâtes immédiatement en contact avec ladite eau contenant un cation formant un gel avec ledit agent gélifiant ionique. Pour ce faire, on peut les arroser avec cette eau ou les y plonger. Au cas où on les arrose, on peut le faire avec un ruissellement linéaire de cette eau ou une rangée de buses ou douches contigüe aux orifices de sortie de la filière de l'appareil utilisé pour la cuisson-extrusion. Au cas où on les plonge, on peut prévoir que les orifices de la filière débouchent directement dans un bain de cette eau.

De préférence, on plonge les pâtes durant 2-30 s dans une eau contenant ledit cation en concentration de 0,05-0,2 moles/l, par exemple.

En ce qui concerne le séchage, on peut recommander de le réaliser à l'air chaud à 40-80°C sous une humidité relative de 30-70%, par exemple.

Le présent procédé peut être mis en oeuvre à l'aide d'appareils usuels tels que pétrins, presses et séchoirs de l'industrie des pâtes alimentaires. Il se prête particulièrement bien à la réalisation dans une extrudeuse à vis simple ou double pourvue d'un manteau divisé en secteurs successifs que l'on peut porter à des températures différentes par circulation de fluides à températures adéquates.

Le présent procédé permet en particulier une extrusion au travers d'une filière constituée notamment d'une plaque d'acier épais percée de trous de section circulaire ou oblongue de petit diamètre ou largeur, aussi petit que 0,4 mm, par exemple. C'est ainsi que, de préférence, on réalise la présente extrusion au travers d'une filière présentant des trous de section circulaire ou oblongue de diamètre ou largeur compris entre 0,4 et 1,0 mm.

Les exemples ci-après sont donnés à titre d'illustration. Les pourcentages et parties y sont indiqués en poids. Ces exemples sont précédés d'une description du test de dureté mentionné ci-dessus, ainsi que d'exemples comparatifs illustrant la détermination de la dureté Instron d'un pouding au riz et de pâtes de riz de type "Beehoon".

### Test de dureté

On utilise un appareil analyseur de texture Instron 1011, avec une cellule de cisaillement Kramer et une vitesse de cisaillement de 100 mm/min.

La force exercée sur la cellule varie au cours du processus de cisaillement. La valeur maximum atteinte par cette force au cours du cisaillement est retenue comme valeur de dureté Instron et exprimée en N.

Dans le cadre du présent exposé, on mesure ainsi la dureté Instron des pâtes selon la présente invention après les avoir cuites.

Pour ce faire, on met 50 g de nouilles déshydratées de type Koay Teow selon la présente invention dans 400 ml d'eau bouillante. On les laisse cuire 2 min. On dispose les nouilles sur un tamis et on les laisse s'égoutter 1 min. On les étale sur un linge humide et on les recouvre d'un linge humide. On les laisse reposer ainsi durant 20 min à 28-32°C.

On remplit une cellule Kramer de nouilles ainsi apprêtées et on les soumet au test de dureté.

### Exemple comparatif i)

Pour préparer un pouding au riz, on disperse 100 g de farine de riz dans un 1 litre d'eau. On porte à ébullition et l'on cuit 5 min. On remplace l'eau qui s'est évaporée et l'on déverse dans une cellule Kramer provisoirement étanchéifiée. On laisse refroidir durant 4 h à 4°C.

Le pouding au riz ainsi formé dans la cellule Kramer est soumis au test de dureté. Il présente une dureté Instron de 17 N.

### Exemple comparatif ii)

On met 50 g de nouilles déshydratées de type Beehoon telles qu'obtenues à l'exemple 1 de US 4544563 dans 400 ml d'eau bouillante. On les laisse cuire 2 min. On dispose les nouilles sur un tamis et on les laisse s'égoutter 1 min. On les étale sur un linge humide et on les recouvre d'un linge humide. On les laisse reposer ainsi durant 20 min à 28-32°C.

On remplit une cellule Kramer de nouilles Beehoon ainsi apprêtées et on les soumet au test de dureté. Elles présentent une dureté Instron de 1420 N.

### Exemple 1

On mélange en continu 86,6 parties d'une semoule de riz à grains ronds (Oryza sativa japonica), 10,0 parties d'amidon de maïs, 2,0 parties de monoglycérides distillés d'origine végétale, 0,4 parties d'alginate de sodium, 0,75 partie d'hydrogénophosphate de calcium dihydrate, 0,25 partie de bicarbonate de sodium et de l'eau adoucie préchauffée à 80°C et contenant environ 1.10⁻⁴ moles de Ca⁺⁺ par litre, de manière à obtenir une pâte à 44,5% de matière sèche.

On réalise ce mélange dans une extrudeuse à double vis Werner & Pfleiderer C 58 où il est cuit-extrudé sous 45-55 bar durant 30 s à une température passant progressivement de environ 80 à 100,5 °C. La filière de cette extrudeuse est constituée par une plaque d'acier épais percée de 36 trous de section oblongue de 0,4 mm de largeur et 5 mm de longueur.

Les pâtes à la sortie de l'extrudeuse sont plongées immédiatement et tirées en continu dans une eau contenant 0,16 moles de Ca⁺⁺ par litre, sous forme de CaCl₂. Leur temps de séjour dans cette eau est d'environ 10 s. Elles sont alors disposées sur une bande sans fin en treillis et conduites simultanément sous un fort courant d'air vertical et au-dessus d'une bouche de forte aspiration. Puis elles sont découpées en longs tronçons et disposées en pelotes de environ 10 cm de diamètre pesant environ 110 g.

On sèche les pâtes à l'air chaud tout d'abord durant 30 min à 60°C sous une humidité relative de 42%, puis durant 60 min à 60°C sous une humidité relative de 60%.

On peut apprêter ces pâtes pour la consommation en les plongeant 2 min dans l'eau bouillante salée. Les pâtes ainsi apprêtées ne collent pas entre elles et présentent une surface et une texture lisses. Cette texture est également tendre et légèrement élastique, comme l'est celle des nouilles de riz traditionnelles connues sous le nom de Koay Teow.

Soumises au test décrit ci-dessus, ces pâtes présentent une dureté Instron de 950 N.

### Exemple 2

On mélange en continu 88,3 parties d'une semoule de riz à grains ronds (Oryza sativa japonica), 10,0 parties d'amidon de maïs, 1,2 parties de monoglycérides distillés d'origine végétale, 0,5 partie d'alginate de sodium, 0,375 partie d'hydrogénophosphate de calcium dihydrate, 0,125 partie de bicarbonate de sodium et de l'eau adoucie à 12°C contenant environ 1.10⁻⁴ moles de Ca⁺⁺ par litre, de manière à obtenir une pâte à 33,5% de matière sèche.

On réalise ce mélange dans une extrudeuse à double vis Werner & Pfleiderer C 58 où il est cuit-extrudé sous environ 9 bar durant environ 45 s à une température passant progressivement de 60 à 100,5 °C. La filière de cette extrudeuse est constituée par une plaque d'acier épais percée de 24 trous de section oblongue de 0,6 mm de largeur et 6mm de longueur.
Les pâtes à la sortie de l'extrudeuse sont plongées immédiatement et tirées en continu dans une eau contenant 0,16 moles de Ca⁺⁺ par litre, sous forme de CaCl₂. Leur temps de séjour dans cette eau est d'environ 10 s. Elles sont alors disposées sur une bande sans fin en treillis et conduites simultanément sous un fort courant d'air vertical et au-dessus d'une bouche de forte aspiration. Puis elles sont découpées en longs tronçons et disposées en pelotes de environ 10 cm de diamètre pesant environ 150 g.

On sèche les pâtes à l'air chaud durant 90 min à 65°C sous une humidité relative de 40-60%.

On peut apprêter ces pâtes pour la consommation en les plongeant 2 min dans l'eau bouillante salée. Les pâtes ainsi apprêtées ne collent pas entre elles et présentent une surface et une texture lisses. Cette texture est également particulièrement tendre et légèrement élastique, comme l'est celle des nouilles de riz traditionnelles connues sous le nom de Koay Teow.

Soumises au test décrit ci-dessus, ces pâtes présentent une dureté Instron de 450 N.

## Revendications

1. Procédé de préparation de pâtes, dans lequel on prépare un mélange présentant une teneur en matière sèche de 32 à moins de 45 % en poids et comprenant une farine ou semoule de riz, de l'eau adoucie dont la concentration en ions calcium est inférieure à 2.10⁻⁴ moles/l, un agent gélifiant ionique, un agent émulsifiant et un agent de levage on forme des pâtes par cuisson-extrusion du mélange sous 8-69 bar à 60-105°C on met immédiatement les pâtes en contact avec de l'eau contenant un cation formant un gel avec ledit agent gélifiant ionique et on les sèche.

2. Procédé selon la revendication 1, dans lequel on prépare un mélange comprenant, en partie en poids, 75-100 parties de farine ou semoule de riz, 5-20 parties d'amidon, 0,2-1 partie d'agent gélifiant ionique, 1-5 parties d'agent émulsifiant, et 0,5-3 parties d'agent de levage.

3. Procédé selon la revendication 2, dans lequel ledit amidon est un amidon de maïs.

4. Procédé selon la revendication 1, dans lequel ledit agent gélifiant ionique est un polysaccharide acide, notamment un alginate, ledit cation est un ion de métal alcalino-terreux, notamment l'ion divalent calcium, ledit agent émulsifiant est un monoglycéride et ledit agent de levage est un carbonate et/ou un phosphate de calcium, ammonium, sodium et/ou potassium.

5. Procédé selon la revendication 1, dans lequel on prépare ledit mélange avec une eau adoucie présentant une température de 10-80° C.

6. Procédé selon la revendication 1, dans lequel on réalise l'extrusion au travers d'une filière présentant des trous de section circulaire ou oblongue de diamètre ou largeur compris entre 0,4 et 1,0 mm.

7. Procédé selon la revendication 6, dans lequel on ajuste la température de la pâte au cours de la cuisson-extrusion de manière qu'elle soit comprise entre plus de 100 et 105°C à la sortie de la filère.

8. Procédé selon la revendication 1, dans lequel on met les pâtes en contact durant 2-30 s avec une eau contenant ledit cation en concentration de 0,05-0,2 moles/l.

9. Procédé selon la revendication 1, dans lequel on sèche les pâtes à l'air chaud à 40-80°C sous une humidité relative de 30-70 %.

10. Pâtes susceptibles d'être obtenues par le procédé selon l'une des revendications 1 à 9.

## Claims

1. Method for preparing pasta, in which a mixture is prepared with a dry matter content from 32 to less than 45wt.% and comprising a rice flour or semolina, softened water whose calcium ion concentration is less than 2.10⁻⁴ moles/l, an ionic gelling agent, an emulsifier and a raising agent, pasta is formed by cooking/extrusion of the mixture at 8-69 bars and 60-105°C, the pasta is immediately brought into contact with water containing a cation forming a gel with the said ionic gelling agent, and they are dried.

2. Method according to Claim 1, in which a mixture is prepared comprising, in parts by weight, 75-100 parts of rice flour or semolina, 5-20 parts of starch, 0.2-1 parts of ionic gelling agent, 1-5 parts of emulsifier and 0.5-3 parts of raising agent.

3. Method according to Claim 2, in which the said starch is a maize starch.

4. Method according to Claim 1, in which the said ionic gelling agent is an acid polysaccharide, notably an alginate, the said cation is an alkaline earth metal ion, notably the divalent calcium ion, the said emulsifier is a monoglyceride and the said raising agent is a calcium, ammonium, sodium and/or potassium carbonate and/or phosphate.

5. Method according to Claim 1, in which the said mixture is prepared with softened water which has a temperature of 10-80°C.

6. Method according to Claim 1, in which the extrusion is carried out through a die with holes of circular or oblong cross section and a diameter or width of between 0.4 and 1.0 mm.

7. Method according to Claim 6, in which the temperature of the dough is adjusted during the cooking/extrusion so that it lies between more than 100 and 105°C at the discharge from the die.

8. Method according to Claim 1, in which the pasta is brought into contact, for a period of 2-30 secs, with water containing the said cation at a concentration of 0.05-0.2 moles/l.

9. Method according to Claim 1, in which the pasta is dried in hot air at 40-80°C and a relative humidity of 30-70%.

10. Pasta capable of being obtained by the method according to one of Claims 1 to 9.

## Patentansprüche

1. Verfahren zur Herstellung von Teigwaren, in dem man eine Mischung herstellt, die einen Trockenmassegehalt von 32 bis weniger als 45 Gew.-% besitzt und Reismehl oder -gries, enthärtetes Wasser, dessen Konzentration an Calciumionen kleiner als 2.10⁻⁴ Mol/l ist, ein ionisches Geliermittel, einen Emulgator und ein Treibmittel enthält, durch Kochextrusion der Mischung unter 8-69 bar bei 60-105 °C Teigwaren formt, die Teigwaren sofort mit Wasser in Kontakt bringt, das ein Kation enthält, das mit dem ionischen Geliermittel ein Gel bildet, und sie trocknet.

2. Verfahren nach Anspruch 1, in dem man eine Mischung herstellt, die in Gewichtsteilen 75-100 Teile Reismehl oder -gries, 5-20 Teile Stärke, 0,2-1 Teile ionisches Geliermittel, 1-5 Teile Emulgator und 0,5-3 Teile Treibmittel enthält.

3. Verfahren nach Anspruch 2, in dem die Stärke Maisstärke ist.

4. Verfahren nach Anspruch 1, in dem das ionische Geliermittel ein saures Polysaccharid, insbesondere ein Alginat ist, das Kation ein Erdalkalimetallion, insbesondere ein zweiwertiges Calciumion ist, der Emulgator ein Monoglycerid und das Treibmittel ein Calcium-, Ammonium-, Natrium- und/oder Kaliumcarbonat und/oder -phosphat ist.

5. Verfahren nach Anspruch 1, in dem man die Mischung mit einem enthärteten Wasser herstellt, das eine Temperatur von 10-80°C hat.

6. Verfahren nach Anspruch 1, in dem man die Extrusion mit einer Düse vornimmt, die Löcher mit einem kreisförmigen oder länglichen Querschnitt mit einem Durchmesser oder einer Breite von 0,4 bis 1,0 mm aufweist.

7. Verfahren nach Anspruch 6, in dem man die Temperatur des Teiges während der Kochextrusion so einstellt, daß sie am Austritt aus der Düse mehr als 100 bis 105°C beträgt.

8. Verfahren nach Anspruch 1, in dem man die Teigwaren während 2-30 s mit Wasser in Kontakt bringt, das das Kation in einer Konzentration von 0,05-0,2 Mol/l enthält.

9. Verfahren nach Anspruch 1, in dem man die Teigwaren mit Heißluft von 40-80°C mit einer relativen Feuchtigkeit von 30-70 % trocknet.

10. Teigwaren, die in dem Verfahren nach einem der Ansprüche 1 bis 9 hergestellt werden können.
